Europäisches Patentamt

European Patent Office

Office européen des brevets

(11) Publication number: **0 105 119**
**B1**

(19)

# EUROPEAN PATENT SPECIFICATION

(12)

(45) Date of publication of patent specification: **14.03.90**

(51) Int. Cl.⁵: **G 01 B 11/02, G 01 B 1/00**

(21) Application number: **83107557.7**

(22) Date of filing: **01.08.83**

(54) Metal tape transducer for the micrometric measurement of linear quantities.

(30) Priority: **03.09.82 IT 2311782**

(43) Date of publication of application:
**11.04.84 Bulletin 84/15**

(45) Publication of the grant of the patent:
**14.03.90 Bulletin 90/11**

(84) Designated Contracting States:
**AT BE CH DE FR GB LI LU NL SE**

(56) References cited:
**FR-A-2 347 652**
**GB-A-1 062 427**
**GB-A-1 376 875**
**US-A-3 816 002**

**MEASUREMENT AND CONTROL, vol. 2, no. 11,
novembre 1969, pages T194-T201, London, GB;
P.H.SYDENHAM: "Tensioned-wire length
measuring instrument**

(73) Proprietor: **Giacomello, Giacomo
Via Domenichino, 50
I-20149 Milano (IT)**

(72) Inventor: **Giacomello, Giacomo
Via Domenichino, 50
I-20149 Milano (IT)**

(74) Representative: **Faggioni, Giovanmaria, Dr. et al
Fumero-Studio Consulenza Brevetti
Widenmayerstrasse 4/I
D-8000 München 22 (DE)**

Courier Press, Leamington Spa, England.

## Description

In the present state of the art, in order to measure linear quantities with micrometric accuracy and discrmination, it is known to use, inter alia, linear measurement transducers mainly based on the following incremental measuring systems:

a) interferometric, by means of a laser beam, in which the size of the incremental measurement unit is determined in relation and proportion to the wavelength of the beam used;

b) inductive and/or capacitive, in which the size of the incremental measurement unit is generally obtained by measurement and sinusoidal interpolation of the intensity of the high frequency electrical or magnetic field produced by a linear inductor having its poles spaced apart by a length equal to a multiple of the size of the incremental measurement unit;

c) optoelectronic, using an optical rule, in which the size of the incremental measurement unit is determined by equidistant micrometric notches engraved on a glass or metal scale at a spacing equal to the measurement unit or a multiple thereof, and such as to be able to be intercepted optoelectronically.

For industrial use, such linear measurement transducers are classified as follows in terms of their particular applicational characteristics:

a) interferometric system: usable for measurements up to and beyond 30 metres, generally with a discrimination of 1 µm or less;

b) induction system: usable for measurements up to 10 metres with a discrimination of 10 µm and 5 µm, and for shorter lengths with a discrminination of up to 1 µm;

c) optoelectronic system: usable for measurements up to 20 metres with a discrimination of 10 µm and/or 5 µm, and for lengths up to 3 metres with a discrimination of 1 µm.

The optoelectronic system—which uses glass or metal optical scales—is at present applied industrially to a greater extent than the other two systems, in particular in the field of machine tools and manufacturing machines in general.

In this measurement system, the measurement rule is universally constructed, as already stated, with a notched scale constituted by a precision-machined mechanically rigid glass or metal bar, with micrometric notches disposed transversely to its longitudinal axis, and such as to allow—by sensing, by transparency or reflection, the moire fringes produced by optical interference with an equivalent grid of notches on the reading cursor—the formation of electrical pulses of a number equal to the number of incremental units scanned over the length travelled by the reading cursor, and of concordant phase with the direction of measurement.

More particularly, in measuring systems of this type, to which the present invention relates, the transducer comprises two functionally inseparable essential parts, namely:

—the measurement scale, constituted by a perfectly rectilinear element, of which the surface carries the engraved measurement notches which can be sensed optically either by transparency or by reflection, and

—the reading head, which is mobile along the scale and is arranged to intercept the passage of the scale notches by transparency or optical reflection, and to provide electrical pulses of a sequence and phase which are concordant with the relative movement between scale and the head, these pulses then being used for controlling bidirectional electronic counters and/or apparatus for monitoring and controlling machine tools, such as "dimension display units", "positioners", "numerical controls" and the like.

According to the known art, nearly all measurement transducers using linear scales of the engraved notch type are constructed with a glass or stainless steel scale in the form of a rectilinear bar of rigid structure. This bar has a fairly large cross-section to enable it to be fixed by screw means or the like over its entire length in a seat provided in a so-called support rule, this generally being in the form of an extruded aluminium section, and serving as a support and slide guide for the reading head.

The steel or glass bar which forms the scale has generally a rectangular cross-section $\gg 10$ mm$^2$, so as to be mechanically rigid, as already stated. In this respect, it must also act as the guide for the reading head in cooperation with the support rule over the entire length of said scale, so as to ensure precise alignment of the head with the scale axis, both in the azimuthal and zenithal directions.

In the present state of the art it is not economically possible to manufacture linear transducers with a glass or steel scale for lengths exceeding 2 or 3 metres without any discontinuity, and such transducers are therefore constructed by fixing two or more aligned bars on to the support rule.

This scale alignment method involves technological and production difficulties, and manufacturing costs which are greater the greater the length of the transducer.

In order to obviate these difficulties, it has already been proposed to engrave the measurement notches on a flexible steel strip which is not under tension, and to then glue this strip on to a rigid support bar.

This obviously simplifies manufacture from the point of view of maintaining an exact distance between the notches over the entire length of the scale. However, the support bar must be again manufactured in the form of several precision-machined pieces, of which the assembly involves the same alignment difficulties, with consequent formation of undulations in the strip which can then generate reading errors.

The FR—A—2,346,652 proposes instead to use a flexible tape, carrying a linear scale onto its surface and being fixed at its ends, with a low tensioning force, onto a rigid case; into the case there slides a slider moving along said tape and carrying a head reading the linear scale. Since the scale is formed on the tape by an electric winding in the form of a serpentine, the tape is scarcely stretched, so that it takes up a very flexed shape between the two fixing ends. This determines reading errors due to the deformations undergone by the tape at the passage of the slider. The FR—A—2,346,652 tends to eliminate these errors by providing the slider with guide and pressure means for the tape.

The structure of the FR—A—2,347,652 has however a main fault, lying in the fact that the slider must comprise pressure means allowing to keep the tape applied against the slider plate, and the result is that the increase in the tensioning imparted on the tape by the pressure means is of a few tens of grams. Although the FR—A—2,347,652 mentions that said tensioning increase merely involves totally negligible measuring errors, it has however been experienced that such errors are by no means acceptable. It should in fact be noted that said tensioning increase, due to the displacement of the slider, determines the risk of a measuring error occurring in a specific measuring position, which error may vary according to whether the slider reaches said position by moving from right to left or, respectively, from left to right. In fact, the tape is more tensioned upstream and more loosened downstream, according to the forward moving direction of the slider.

The FR—A—2,347,652 is therefore not apt to obtain a very high precision measuring, as required, and this mainly for two reasons:

—the tape forms a catenary with an exceedingly high camber;

—the slider imparts a pressure and a friction on the tape, which generate additional tensioning forces, beyond control.

The object of the present invention is to solve the problems and obviate the known technical and technological limitations connected with optical rule transducers of length exceeding two metres, which use a rigid glass or steel scale. In this respect, the invention provides an optical rule structure, the scale of which has no discontinuity, even when of considerable length such as greater than 10 meters and which can be manufactured and assembled very easily and at low cost.

Another object of the invention is to overcome the drawbacks of the flexible tape measuring device described in the FR—A—2,347,652, by realizing in particular a measuring device, wherein the sliding friction of the slider on the tape is practically eliminated and wherein the perfect alignment of the tape is guaranteed without any proper guide means on the slider.

These objects are reached—in a transducer for the micrometric measurement of linear quantities, of the type comprising a support rule having ends, a thin continuous metal tape having a plurality of measurement notches at regular micrometric intervals forming a scale, said tape having its ends fixed to support means at the ends of said support rule to suspend and keep taut the tape, a reading head which moves axially relative to the tape in order to sense the measurement notches, said reading head being slidably supported along said support rule and comprising a guide groove coaxial to the tape, in which the tape slides when the head moves relative to the tape—essentially due to the fact that said metal tape has a cross-section of less than 1 mm$^2$, that said support means for the ends of the metal tape comprise tensioning means to keep the tape under a predetermined tension corresponding to a force between 100 and 400 times the total weight of the tape, and that said tape has measurement notches which are mutually spaced by an extent which, with the tape under said predetermined tension, is equal to, and with the loosened tape, is less than said micrometric intervals forming the scale.

In relation to this characteristic structure, it is appropriate to observe that:

—First of all, the tape is tensioned with a very high force, corresponding to 100—400 times the weight of the tape. This allows the tape to take up a positioning which is perfectly rectilinear on the horizontal plane and which, due to gravity, is just slightly arched—or caternary, or else parabolic or circle-arc shaped—on the vertical plane, i.e. with a minimum camber, for instance, of 0.3 mm per meter of tape length.

—Secondly, the tape section is very reduced: in particular, it is less than 1 mm$^2$. By adopting this section, it is in fact possible to keep the weight of the tape small. This allows to obtain the above mentioned characteristics, with a tensioning force which is fully acceptable in the construction of a measuring instrument. (It should be noted that, if the above characteristic were to be applied to a tape of the type according to the FR—A—2,347,652—having for instance a section of 10 mm$^2$ and thus a weight of the order of 70—80 grs/m—a tape of 10 m would have to be subjected to a tensioning force of 70 to 320 kg, namely a force which is fully incompatible with the usual housing structures of measuring instruments).

—Finally, the measurement notches are etched on the tape, keeping this latter under a pre-established tension, which is equal to the tension to which the tape is subjected when it is mounted in the housing of the measuring instrument. This characteristic is, in turn, strictly connected to the previous ones since, when the tape is tensioned with a high force, it undergoes a considerable elongation which, on the other hand, is not linear, i.e. constant in all its points: this mainly depends on the fact that the section of the tape used is by no means completely uniform.

Further characteristics and advantages of the transducer structure according to the present invention will be more apparent from the description of one embodiment thereof given hereinafter by way of example and illustrated on the accompanying drawings, in which:

Figs. 1 and 2 are respectively a diagrammatic plan and elevational view of a transducer according to the invention;

Fig. 3 is a cutaway view on the line III—III of Fig. 1;

Figs. 4 and 5 are two diagrammatic and elevational views taken respectively at one end and the other of the transducer.

As shown, the transducer comprises a support rule 1 indicated only by dashed lines, and on which the support blocks 13 and 19 for the flexible metal tape 2 are mounted.

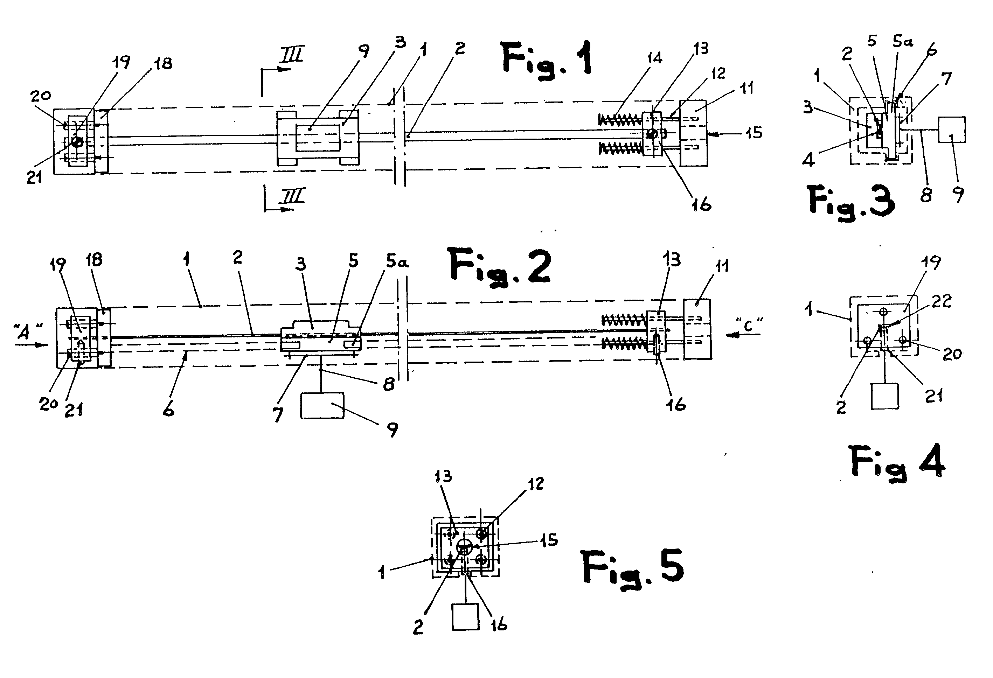

Along the tape 2, or rather along the rule 1, there slides the reading head which is composed of the optoelectronic sensor 3 fixed to the slide block 5 (see also Fig. 3), and comprising slides 5a slidable in the guide channels 6 of the support rule 1. The box 9 for connection to the external apparatus also forms part of the reading head, and is joined to the sensor 3 by way of the transmission 8 and the swing plate 7. This latter allows the box 9 to make angular movements without any axial sliding of the reading head.

One of the ends of the rule 1 is closed by the plate 11 which connects the block 13. It supports four rods 12 (see also Fig. 5), on which the block 13 is mounted to slide axially.

Spring 14, coaxial to the rods 12 and fixed to the free end thereof, rest on the block 13 and tend to urge it towards the plate 11. One end of the metal tape 2 is fixed on to the block 13, for example by means of a fixing screw 16.

At the other end of the rule 1, the block 19—on which the other end of the tape 2 is fixed, again by means of a fixing screw 21 analogous to the screw 16—is mounted on the cross-member 18 rigid with the wall 1 by simply holding it in position by means of three adjustment screws 20 (see also Fig. 4).

The tape is assembled as follows: after fixing one end of the tape 2 on to the block 13 and passing the tape through the grooves 4 and 22, the other end of the tape is gripped with a dynamometer.

Traction is then exerted on the tape 2, the value being varied by the dynamometer until the tape is under the predetermined tension, as defined hereinafter, after which the fixing screw 21 is tightened.

When the screw 21 has been tightened and the dynamometer removed, the tension in the tape 2 is maintained by the springs 14, which have been loaded during the same operation.

The assembly can also be carried out by preloading the springs 14 before inserting the tape 2. For this purpose, the block 11 comprises the bore 15 through which, by means of a rod dynamometer, and axial thrust can be exerted on the block 13 against the springs 14 until the prescribed preloading has been attained. The tape is then inserted into the rule and is fixed—while not under tension—at its two ends by tightening the screws 16 and 21 of the blocks 13 and 19. On removing the dynamometer, the tension in the tape 2 is maintained by the spring 14, in equilibrium with the preloading thereof.

When the tape has been assembled and tensioned, the final setting of the loading of the springs 14 is effected by adjusting the position of the block 19 by means of the adjustment screws 20. When assembly is complete, the scale is calibrated by comparison with a primary sample scale, using comparison both in terms of number and phase with the pulses emitted by the sample scale when making the same linear movements as the scale being calibrated. The micro-variations in the length of the scale, which are necessary for calibration purposes, are obtained by adjusting the adjustment screws 20 of the block 19.

According to one important characteristic of the invention, on assembling the reading head, the tape 2 is passed through a guide groove 4 formed between the slide block 5 and the optoelectronic sensor 3. This guide groove 4 ensures that the tape 2, although being able to slide freely relative to the reading head, is kept in perfect zenithal and azimuthal axial alignment with the optical comparison matrix mounted on the reading head.

The structure heretofore described has been found to perfectly satisfy the requirements of a transducer for the micrometric measurement of linear quantities, with an accuracy of the same order as transducers comprising a scale in the form of a rigid glass or steel bar.

In this respect, according to the basic idea of the present invention, a flexible metal tape of any length (La), and possessing high uniformity, mechanical strength, flexibility and inextensibility characteristics and very low weight per unit of length, can be used as a measurement scale for linear quantities with micrometric accuracy if kept taut at its ends between two substantially fixed and horizontally aligned fixing points p, p', under a force Tr such that the tangent at the fixing points p, p' to the arc (La) described by the tape forms an angle $(\alpha) \leq 0.2°$ with the straight line (Lc) passing through said points.

Taking account of this condition, when the tape is horizontally taut it becomes arranged by gravity as a parabolic arc, of which the length La is equal—less and error $\varepsilon_o$—to the length La' of the circular arc tangential to the points p and p' and of radius

$$R = \frac{Lc}{2 \sin \alpha}$$

As it can be assumed that $La - La' = \varepsilon_o \rightarrow 0$ for arcs less than or equal to 0.2°, for practical purposes $\varepsilon_o$ can be ignored in the calculation, as $\varepsilon_o \ll \varepsilon'$, where $\varepsilon' = La - Lc$, i.e. the different between the length of the arc La and its chord Lc. Letting $La = La' + \varepsilon_o$, it follows that

$$La = \frac{\pi R}{180} 2\alpha + \varepsilon_o,$$

and letting

4

$$R = \frac{Lc}{2 \sin \alpha},$$

then

$$La = Lc \frac{\pi\alpha}{180 \sin \alpha} + \varepsilon_o$$

For practical purposes, it can be considered that $\varepsilon_o = 0$, so that putting $Lc = 1$, then the unit measurement error $\varepsilon_u$, i.e.

$$\frac{La - Lc}{Lc},$$

becomes:

$$\varepsilon_u = (\frac{\pi\alpha}{180 \sin \alpha} - 1) = \mu/m$$

which, resolving, as a function of $\alpha$, gives:

TABLE (A)

| $(\alpha)$ | $(\varepsilon_u)$ |
|---|---|
| 0.07° | 0.33 μm/m |
| 0.10° | 0.57 μm/m |
| 0.15° | 1.18 μm/m |
| 0.20° | 2.04 μm/m |

Consequently, in order to contain the measurement error within the limits of

$$\varepsilon_u = 3.3 \times 10^{-7}/m \quad \text{and} \quad \varepsilon_u = 2 \times 10^{-6}/m$$

according to the principles of the invention, the angle $\alpha$ of tangency between the arc La and the chord Lc can be chosen between 0.07° and 0.2°, which is obviously compatible with the physical strength characteristics of the tape used.

Within the indicated limits of the angle $\alpha$, i.e. $\leq 0.2°$, the parabolic arc described by the thin tape of weight P tends to coincide with the circular arc of radius

$$R = \frac{Lc}{2 \sin \alpha}$$

when subjected to a tension Tr, and thus the respective heights F of the parabolic arc and F′ of the circular arc under consideration also become approximately equal, so that putting

$$F = \frac{P(Lc)^2}{8Tr}$$

and

$$F' = R(1 - \cos \alpha) = \frac{Lc}{2 \sin \alpha}(1 - \cos \alpha),$$

then if $F = F' + \varepsilon$,

$$\frac{F}{F' + \varepsilon} = \frac{P(Lc)^2}{8Tr} \bigg/ \frac{Lc}{2 \sin \alpha}(1 - \cos \alpha) + \varepsilon = 1$$

from which, considering that $\varepsilon \to 0$, the tensioning force Tr of the tape becomes

$$Tr = \frac{P \cdot Lc \cdot \sin \alpha}{4(1 - \cos \alpha)} \qquad (B)$$

where $Tr \leqslant Ts$, $Ts$ being equal to

$$\frac{\sigma \ p \cdot s}{0.0033} \qquad (C)$$

where

F=height of arc La in mm,
P=weight of tame in N/m,
Lc=length of scale in m,
Tr=tensioning force in N,
Ts=maximum applicable tensioning force in grams (stability condition),
$\varepsilon = F - F'$,
$\sigma p$=elastic limit $(\sigma_{0.01\%})$ in KN/mm$^2$,
S=tape cross-section in mm$^2$.

On the basis of these observations, transducer scales were tested using stainless steel tape (nominal analysis in %: Cr 17; Ni 8, C 0.09; Si 1.2; Mn 1.3; Mo 0.7) of gauged thickness, having the following characteristics at 20°C:

—ultimate tensile strength: 2050 N/mm$^2$.
—yield strength (0.02): 1950 N/mm$^2$.
—elastic limit $(\sigma_{0.01\%})$: 1100 N/mm$^2$.
—modulus of elasticity: 180,000 N/mm$^2$.
—modulus of rigidity: 70,000 N/mm$^2$.
—surface state: specular.

Using a metal tape of this type, transducers were constructed for example of length up to 10 metres with tapes of the following dimensions:

1) width: 5.6 mm             thickness: 50 µm
   cross-section: 0.28 mm$^2$      weight: $2.11 \cdot 10^{-2}$ N/m (2.15 g/m)

2) width: 5.6 mm             thickness: 100 µm
   cross-section: 0.56 mm$^2$      weight: $4.22 \cdot 10^{-2}$ N/m (4.3 g/m)

The following were engraved transversely to the longitudinal axis on these tapes, which were produced initially of indefinite length:

—25,000 notches/m          spaced apart by 20 µm or
—50,000 notches/m          spaced apart by 10 µm

with a notch length of 2.5 mm.

Each of these tapes—mounted on the support rule 1 in the aforesaid manner and subjected to a tension T calculated in the manner indicated, and such in each case as to reduce the error $\varepsilon_u$ to the values given in Table A—was perfectly suitable for use as a micrometric scale for precision transducers.

By way of example, the following Table D gives data determined on transducers constructed in accordance with the invention, compared with calculated data. This table relates to test transducers of a maximum length of 10 m, for different tensions of the tape used, which had an elastic limit $\sigma_{0.01\%}$ of $1.09 \cdot 10^3$ N/m (111 kg/m$^2$).

**EP 0 105 119 B1**

TABLE D

|  | Ex. 1 | Ex. 2 | Ex. 3 | Ex. 4 | Ex. 5 | Ex. 6 |
|---|---|---|---|---|---|---|
| Tape section, mm$^2$ | 0.28 | 0.56 | 0.28 | 0.56 | 0.28 | 0.56 |
| Error $\varepsilon_u=\mu m/m$ calculated | 0.33 | 0.33 | 0.57 | 0.57 | 1.18 | 1.18 |
| measured (1) | <1 | <1 | <1 | <1 | ~1.5 | ~1.5 |
| Tape tension $Tr/Lc=g/m$, (1 g/m$\triangleq$9.81 · $10^{-3}$ N/m) calculated | 880 | 1760 | 615 | 1230 | 410.5 | 821 |
| applied | 880 | 1760 | 615 | 1230 | 410 | 820 |
| Ratio Tr/P | 409 | 409 | 286.5 | 286.5 | 190.7 | 190.7 |
| (2) Max length executed Lc(e) in m | 5 | 5 | 10 | 10 | 10 | 10 |
| (3) Max length obtainable Lc(2) in m | 11.5 | 11.5 | 15.5 | 15.5 | 23.2 | 23.2 |
| Applied force (in kg, 1 kg $\triangleq$9.81 N) Tr= | 4.4 | 8.8 | 6.15 | 12.3 | 4.10 | 8.21 |
| Deflection at centre F/Lc(e) in mm/m | 0.3 | 0.3 | 0.45 | 0.45 | 1.0 | 1.0 |
| Max tens. ratio Ts/Tr (in %) | 46 | 46 | 65 | 65 | 43 | 43 |

Notes
(1) determined on scales of length Lc=1 m and Lc=2 m.
(2) maximum length tested in m.
(3) maximum length obtainable where Tr=Ts.
As the tape scale remains permanently under tension with a force of Tr when installed in the support rule, this tensioning load must also be applied to the tape during the engraving process of the measurement notches in order obviously to nullify the effect on measuring accuracy of the elongation due to the tensioning.

Taking account of this, as the degree of elongation depends on the tension Tr, the minimum error condition ($\varepsilon_u$/m) is obtained for example as follows.

The value of Tr for a given weight P of the tape of length Lc is defined on the basis of formula (B). The notches are then engraved while maintaining the tape under tension with a force $T'r=Tr$; the error in the length of the engraved tape—which in the case of a non-tensioned tape is $\varepsilon'_u=\varepsilon_u-Elong/m$ (where Elong/m is the tape elongation per metre under the tension $T'r$)—becomes equal to the scheduled error $\varepsilon_u$ when the tape is subsequently tensioned when mounted in the support rule, so that $Tr-T'r=0$.

Thus as seen from Table D, the measurement error deriving from the arcuate arrangement of the metal tape remains contained within the limits which are normally scheduled and obtained in known linear transducers using a scale in the form of a rigid glass or metal bar.

In contrast, the construction of an optoelectronic rule such as that described with reference to the drawings is considerably simplified. In particular, the constructional difficulty is practically independent of the length of the rule. From the cost aspect, this means a reduction in manufacturing cost to a minimum of 1/3 in the case of small optical rules (up to 2 metres), down to as little as 1/10 in the case of larger optical rules (up to 10 metres and beyond).

The invention is not limited to the particular embodiment illustrated and described, and various modifications can be made thereto all of which are within the scope of an expert of the art and all of which consequently fall within the range of protection of the invention itself.

**Claims**

1. A transducer for the micrometric measurement of linear quantities, of the type comprising a support rule (1) having ends, a thin continuous metal tape (2) having a plurality of measurement notches at regular micrometric intervals forming a scale, said tape (2) having its ends fixed to support means at the ends of said support rule (1) to suspend and keep taut the tape, a reading head (3, 5) which moves axially relative to the tape (2) in order to sense the measurement notches, said reading head (3, 5) being supported slidably along said support rule (1) and comprising a guide groove (4) coaxial to the tape (2), in which the tape (2) slides when the head (3, 5) moves relative to the tape (2), characterized in that said metal tape (2) has a

7

cross-section less than 1 mm², in that said support means of the ends of the metal tape comprise tensioning means (14) to keep the tape (2) under a predetermined tension corresponding to a force between 100 and 400 times the total weight of the tape (2), and in that said tape (2) has measurement notches which are mutually spaced by an extent which, with the tape (2) under said predetermined tension, is equal to, and with the loosened tape (2), is less than said micrometric intervals forming the scale.

2. A transducer as claimed in claim 1, wherein said tape tensioning means comprise spring means (14) anchored to at least one of the tape ends.

3. A transducer as claimed in claim 1, wherein the thin continuous metal tape (2) has a cross-section between 0.2 and 1.0 mm², and a width/thickness ratio between 20 and 100, the measurement notches being engraved on one of its surfaces.

4. A transducer as claimed in claim 1 or 3, wherein the thin continuous metal tape (2) has at least one specular surface and is prepared by cold-rolling a chromium-containing austenitic stainless steel alloy, possessing the following physical characteristics at 20°C:
—ultimate tensile stress$>$1900 N/mm²;
—yield resistance (0.22%)$>$1900 N/mm²;
—modulus of elasticity$>$175,000 N/mm²;
—modulus of rigidity$>$70,000 N/mm²;
—elastic limit ($\sigma_{0.01\%}$)$\geq$1100 N/mm².

5. A transducer as claimed in claim 4, wherein the thin continuous metal tape (2) is kept taut by a tensioning force Tr which, expressed in N is given by the formula

$$Tr=\frac{P \cdot Lc \cdot \sin \alpha}{4(1-\cos \alpha)} \leqslant \frac{\sigma\, p \cdot S}{0.0033}$$

where:
$\sigma_p$=elastic limit ($\sigma_{0.01\%}$) in KN/mm²,
S=tape cross-section in mm²,
Lc=tape scale length in m,
P=tape weight in N/m,
$\alpha$=angle (between 0.07° and 0.2°) formed between the straight line joining the two tape fixing points in the horizontal direction, and the tangent to said tape at one of these points.

6. A transducer as claimed in claim 1, wherein one of the ends of the thin metal tape (2) constituting the measurement scale is fixed onto a block (13) slidable along the axis of said tape, on this block there being applied the thrust of spring means (14) which can be preset, in order to provide the tape tensioning load.

7. A transducer as claimed in claim 1, in which one of the ends of the tape is fixed onto a support block (19), of which the position can be adjusted along the tape axis by means of adjustment screws (20).

8. Method for producing a transducer for the micrometric measurement of linear quantities, of the type comprising a support rule having ends, a thin continuous metal tape having a plurality of measurement notches at regular micrometric intervals forming a scale, said tape having its ends fixed to support means at the ends of said support rule to suspend and keep taut the tape, a reading head which moves axially relative to the tape in order to sense the measurement notches, said reading head being supported slidably along said support rule and comprising a guide groove coaxial to the tape, in which the tape slides when the head moves relative to the tape, characterized in that it comprises the following steps:
—making use of a metal tape having a cross-section less than 1 mm²,
—fixing the metal tape by its ends and subjecting the same to a predetermined tensioning, corresponding to a force of 100 to 400 times its total weight,
—engraving said measurement notches while the tape is kept under said tension,
—mounting the tape in its support rule, fixing it by its ends,
—putting the tape under a tension equal to said predetermined tension by applying a corresponding force at one of its ends.

**Patentansprüche**

1. Umsetzer für das Messen mikrometrischer Linearquantitäten, von der Art, die ein Halteprofil (1) mit Enden, ein dünnes durchgehendes Metallband (2) mit einer Vielzahl von Meßkerben in regelmäßigen mikrometrischen Intervallen, die eine Skala bilden, wobei die Enden besagten Bandes (2) an Haltemitteln an den Enden besagten Halteprofils (1) befestigt sind, um das Band aufzuhängen und gespannt zu halten, einen Ablesekopf (3, 5), der sich relativ zum Band (2) axial bewegt, um die Meßkerben abzutasten, wobei besagter Ablesekopf (3, 5) entlang besagten Halteprofils (1) verschiebbar gehalten und eine mit dem Band (2) koaxiale Führungsnut (4) umfaßt, in der das Band (2) gleitet, wenn der Kopf (3, 5) sich relativ zum Band (2) bewegt, umfaßt, dadurch gekennzeichnet, daß das besagte Metallband (2) einen Querschnitt kleiner als 1 mm² besitzt, daß besagte Haltemittel der Enden des Metallbandes Spannmittel (14) umfassen, um das Band (2) unter einer vorbestimmten Spannung zu halten, die einer Kraft zwischen dem 100 und 400fachen des Gesamtgewichts, des Bandes (2) entspricht, und daß besagtes Band (2) Meßkerben besitzt, deren gegenseitiger Abstand ein Maß besitzt, das bei dem Band (2) unter besagter vorbestimmter Spannung gleich mit und bei dem entspannten Band (2) geringer als besagte mikrometrische Intervalle, welche die Skala bilden ist.

2. Umsetzer nach Anspruch 1, dadurch gekennzeichnet, daß besagte Bandspannmittel Federmittel (14) umfassen, die an wenigstens einem der Bandenden verankert sind.

3. Umsetzer nach Anspruch 1, dadurch gekennzeichnet, daß das dünne durchgehende Metallband (2) einen Querschnitt zwischen 0,2 und 1,0 mm² und ein Breite - Dicke - Verhältnis zwischen 20 und 100 besitzt, wobei die Meßkerben auf einer seiner Oberflächen eingeprägt sind.

4. Umsetzer nach Anspruch 1 oder 3, dadurch gekennzeichnet, daß das dünne durchgehende Metallband (2) wenigstens eine spiegelnde Oberfläche besitzt und durch Kaltwalzen einer chromhaltigen austenitischen rostfreien Stahllegierung hergestellt ist, welche bei 20°C die folgenden physikalischen Eigenschaften besitzt:

—Zerreißbeanspruchung>1900 N/mm²,
—Streckwiderstand (0,22%)>1900 N/mm²,
—Elastizitätsmodul>175.000 N/mm²
—Starrheitsmodul>70.000 N/mm²,
—Elastizitätsgrenze ($\sigma_{0,01\%}$)≥1100 N/mm².

5. Umsetzer nach Anspruch 4, dadurch gekennzeichnet, daß das dünne durchgehende Metallband (2) mit einer Spannkraft Tr gespannt gehalten wird, die, ausgedrückt in N, durch die Formel

$$Tr=\frac{P\cdot Lc\cdot \sin \alpha}{4(1-\cos \alpha)}\leqslant \frac{\sigma\, p\cdot s}{0,0033}$$

gegeben ist, in der:

$\sigma_p$=Elastizitätsgrenze ($\sigma_{0,01\%}$) in kN/mm²,
S=Bandquerschnitt in mm²,
Lc=Bandskalenlänge in m,
P=Bandgewicht in N/mm,
$\alpha$=Winkel (zwischen 0,07° und 0,2°), der zwischen der gerade Linie, welche die zwei Bandbefestigungspunkte in der horizontalen Richtung verbindet, und der Tangente an besagtes Band an einem dieser Punkte gebildet ist.

6. Umsetzer nach Anspruch 1, dadurch gekennzeichnet, daß eines der Enden des dünnen Metallbands (2), das die Meßskala darstellt, auf einem Block (13) befestigt ist, der entlang der Achse besagten Bandes verschiebbar ist, wobei dort auf diesem Block die Druckkraft der Federmittel (14) angreift, die voreingestellt werden kann, um die Bandspannbelastung bereitzustellen.

7. Umsetzer nach Anspruch 1, dadurch gekennzeichnet, daß eines der Enden des Bandes auf einem Halteblock (19) befestigt ist, dessen Position mit Hilfe von Einstellschrauben (20) entlang der Bandachse eingestellt werden kann.

8. Verfahren zur Herstellung eines Umsetzers für das Messen mikrometrischer Linearquantitäten, von der Art, die Halteprofile mit Enden, ein dünnes durchgehendes Metallband mit einer Vielzahl von Meßkerben in regelmäßigen mikrometrischen Intervallen, die eine Skala bilden, wobei die Enden besagten Bandes an Haltemitteln an den Enden besagten Halteprofils befestigt sind, um das Band aufzuhängen und gespannt zu halten, einen Ablesekopf, der sich relativ zum Band axial bewegt, um die Meßkerben abzutasten, wobei besagter Ablesekopf verschiebbar entlang besagten Halteprofils gehalten wird und eine mit dem Band koaxiale Führungsnut umfaßt, in der das Band gleitet, wenn sich der Kopf relativ zum Band bewegt, umfaßt, dadurch gekennzeichnet, daß es die folgenden Schritte umfaßt:

Gebrauchmachen von einem Metallband mit einem Querschnitt kleiner als 1 mm²,
—Befestigen des Metallbandes an seinen Enden und Unterwerfen desselben unter ein vorbestimmtes Spannen, das einer Kraft vom 100 bis 400 fachen seines Gesamtgewichts entspricht,
—Einprägen besagter Meßkerben, während das Band unter besagter Spannung gehalten wird,
—Anbringen des Bandes in seinem Halteprofil, wobei es an seinen Enden befestigt wird,
—Setzen des Bandes unter eine Spannung, die gleich besagter vorbestimmter Spannung ist, durch Anlegen einer entsprechenden Kraft an eines seiner Enden.

**Revendications**

1. Un transducteur destiné à la mesure micrométrique de quantités linéaires, du type comprenant une règle (1) de support comportant des extrémités, une bande métallique mince continue (2) comportant plusieurs encoches de mesure à des intervalles micrométriques réguliers formant une échelle, les extrémités de ladite bande étant fixées à des moyens de support aux extrémités de ladite règle (1) de support pour suspendre le ruban (2) et le maintenir raidi, une tête (3, 5) de lecture qui se déplace axialement par rapport à la bande (2) afin de détecter les encoches de mesure, ladite tête (3, 5) de lecture étant supportée à coulissement le long de ladite règle (1) de support et comprenant une rainure (4) de guidage coaxiale à la bande (2), dans lequel la bande (2) coulisse lorsque la tête (3, 5) se déplace par rapport à la bande (2), caractérisé en ce que ladite bande métallique (2) est d'une section transversale inférieure à 1 mm², en ce que lesdits moyens de support de l'extrémité de la bande métallique comprennent des moyens (14) de mise en tension pour maintenir la bande (2) sous une tension déterminée au préalable correspondant à une force comprise entre 100 et 400 fois le poids totale de la bande (2), et en ce que ladite bande (2) comporte des encoches de mesure qui sont espacées mutuellement d'une amplitude et qui, lorsque la bande se trouve dans ladite tension déterminée au préalable, est égale à des intervalles micrométriques formant l'échelle et qui, lorsque la bande (2) est relâchée, est inférieure auxdits intervalles.

2. Un transducteur selon la revendication 1, dans lequel lesdits moyens de mise en tension de la bande comprennent des moyens élastiques (14) ancrés au moins à l'une des extrémités de la bande.

3. Un transducteur selon la revendication 1, dans lequel la fine bande métallique continue (2) est d'une section transversale comprise entre 0,2 et 1,0 mm², et le rapport largeur/épaisseur est compris entre 20 et 100, les encoches de mesure étant gravées sur l'une de ses surfaces.

4. Un transducteur selon la revendication 1 ou 3, dans lequel la fine bande métallique continue (2) présente au moins une surface spéculaire et est préparée par laminage à froid d'un alliage d'acier austénitique inoxydable à teneur en chrome possédant les caractéristiques suivantes à 20°C:

—résistance à la traction limite>1900 N/mm²,
—limite conventionnelle d'élasticité (0,22%)>1900 N/mm²,
—module d'élasticité>175 000 N/mm²,
—module de rigidité>70 000 N/mm²,
—limité élastique ($\sigma_{0,01\%}$)⩾1100 N/mm².

5. Un transducteur selon la revendication 4, dans lequel la fine bande métallique continue (2) est maintenue raidie par une force de tension Tr qui, exprimée en N est donnée par la formule

$$Tr = \frac{P \cdot Lc \cdot \sin\alpha}{4(1-\cos\alpha)} \leqslant \frac{\sigma p \cdot S}{0,0033}$$

où:

$\sigma p$=limite élastique ($\sigma_{0,01\%}$) en KN/mm²,
S=section transversale de bande en mm²,
Lc=longueur de l'échelle de bande en m,
P=poids de la bande en N/m,
$\alpha$=l'angle (comprise entre 0,07° et 0,2°) formé entre la ligne droite joignant les deux points de fixation de la bande dans la direction horizontale avec la tangente à ladite bande en l'un de ses points.

6. Un transducteur selon la revendication 1, dans lequel l'une des extrémités de la fine bande métallique (2) constituant l'échelle de mesure est fixée sur un bloc (13) coulissant le long de l'axe de ladite bande, une poussée réglable au préalable desdits moyens élastiques (14) étant appliquée à ce bloc, afin de réaliser la charge de tension de la bande.

7. Un transducteur selon la revendication 1, dans lequel l'une des extrémités de la bande est fixée sur un bloc (19) de support dont la position peut être réglée le long de l'axe de la bande aux moyens de vis (20) de réglage.

8. Procédé pour produire un transducteur pour la mesure micrométrique de quantités linéaires, du type comportant une règle de support présentant des extrémités, une fine bande métallique continue comportant plusieurs encoches de mesure à des intervalles micrométriques réguliers formant une échelle, les extrémités de ladite bande étant fixées à des moyens de support aux extrémités de ladite règle de support pour suspendre la bande et la maintenir raidie, une tête de lecture qui se déplace axialement par rapport à la bande pour détecter les encoches de mesure, ladite tête de lecture étant supportée à coulissement le long de ladite règle de support et comprenant une rainure de guidage coaxiale à la bande, dans laquelle coulisse la bande lorsque la tête se déplace par rapport à la bande, caractérisé en ce qu'il comprend les étapes suivantes:

—utiliser une bande métallique d'une section transversale inférieure à 1 mm²,
—fixer la bande métallique par ses extrémités et la soumettre à une tension déterminée au préalable, correspondant à une force de 100 à 400 fois son poids total,
—graver lesdites encoches de mesure pendant que la bande est maintenue sous ladite tension,
—monter la bande dans sa règle de support, en la fixant par ses extrémités,
—mettre la bande sous une tension égale à ladite tension déterminée au préalable en appliquant une force correspondante à l'une de ses extrémités.

Fig. 1

Fig. 2

Fig. 3

Fig. 4

Fig. 5